# FASCICULE DE BREVET EUROPEEN

(11) **EP 1 271 025 B1**
(45) Date de publication et mention de la délivrance du brevet: **23.04.2008**
(21) Numéro de dépôt: 02291472.5
(22) Date de dépôt: 13.06.2002
(51) Int. Cl.: F16K 1/30

(54) **Corps de robinet de bouteille de plongée à deux sorties, et bouteille de plongée équipée d'un robinet comportant un tel corps**
Hahnküken mit zwei Ausgängen für eine Taucherflasche und Taucherflasche mit einer solchen Vorrichtung
Tap with two outlets for a diving tank and diving tank equiped with such a device

(30) Priorité: 18.06.2001 FR 0107948
(43) Date de publication de la demande: 02.01.2003
(73) Titulaire: LA SPIROTECHNIQUE INDUSTRIELLE ET COMMERCIALE, 06510 Carros (FR)
(72) Inventeur: Carepa, Stéphane, 06570 Saint Paul (FR); Peyron, Nicolas, 06610 La Gaude (FR)
(74) Mandataire: Le Moenner, Gabriel

(56) Documents cités:
- US-A- 2 855 923
- US-A- 2 939 457
- US-A- 2 939 471
- US-A- 5 176 169
- US-A- 5 379 761

## Description

La présente invention concerne les robinets de plongée sous-marine à deux sorties, du type comprenant un corps de robinet avec deux sorties de gaz haute pression de raccordement à des circuiteries d'utilisation, typiquement vers des détendeurs tel que défini au préambule de la revendication 1.

Un tel corps de robinet de bouteille de plongée est par exemple connu du document US-A-5176169.

Dans les robinets connus de ce type, comme d'ailleurs décrit et représenté en pages 10 et 11 de la brochure Spiro-Aqualung de 1996 ou, plus récemment, en page 14 de la brochure 2000 de Aqualung (valve ou robinet "V"), le corps de robinet est symétrique avec les axes des sorties dans un même plan orthogonal à l'axe de l'embase. Les sorties étant prévues pour monter deux détendeurs de premier étage alimentant chacun au moins généralement deux flexibles de gaz comprimé, l'agencement symétrique pose des problèmes de mise en place et d'encombrement des détendeurs et de leurs tuyauteries associées pouvant, à l'usage, entraîner des incidents mécaniques.

La présente invention a pour objet d'éliminer grandement ces inconvénients en proposant une architecture de corps de robinet limitant les interférences entre les circuiteries raccordées aux deux sorties.

Pour ce faire, selon l'invention les sorties sont décalées tel que décrit à la revendication 1.

Selon d'autres caractéristiques plus particulières,
- le décalage (vertical) est compris entre environ 5 et 80 mm, typiquement entre 20 et 60 mm environ ;
- l'écartement (horizontal) entre les axes de sorties, dans une direction orthogonale à l'axe de l'embase, est compris entre 60 et 130 mm environ, typiquement entre 70 et 100 mm environ, cet écartement horizontal étant avantageusement sensiblement centré sur l'axe de l'embase.

L'invention concerne également une bouteille de plongée équipée d'un robinet comportant un corps de robinet du type ci-dessus.

D'autres caractéristiques et avantages de l'invention ressortiront de la description suivante de modes de réalisation, donnée à titre illustratif mais nullement limitatif, faite en relation avec des dessins annexés, sur lesquels :
- la figure 1 est une vue de face d'un mode de réalisation d'un corps de robinet selon l'invention; et
- la figure 2 est une vue en perspective d'un tel corps de robinet monté sur une bouteille de plongée et portant des tuyauteries raccordées aux deux sorties.

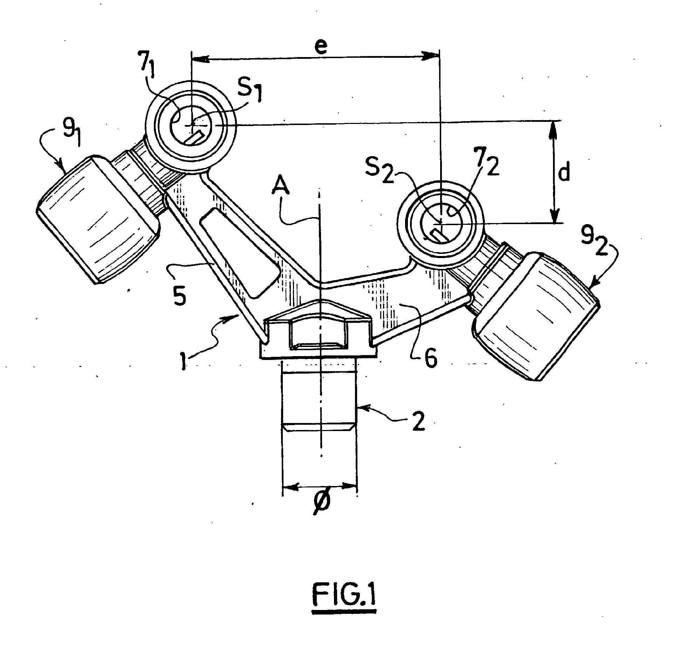

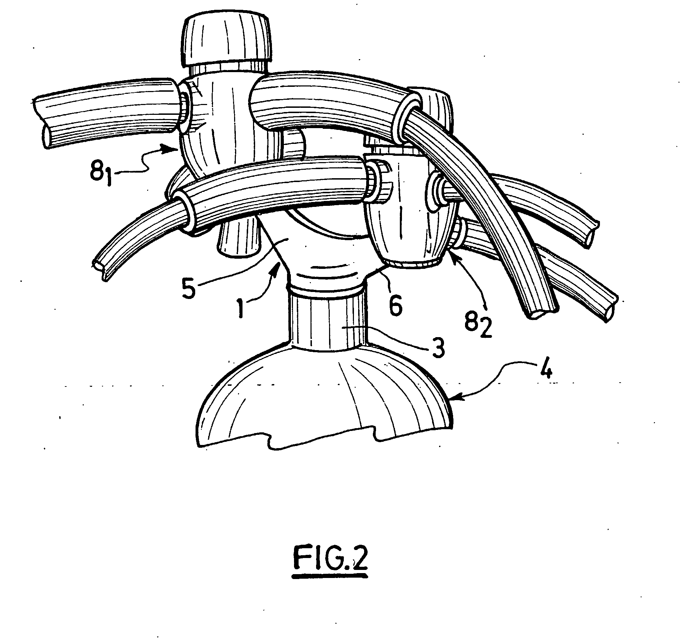

Dans le mode de réalisation représenté, un corps de robinet 1 selon l'invention, réalisé typiquement en une ou deux pièces matricées en laiton galvanisé, comprend généralement une embase filetée 2, d'axe longitudinal A, servant au montage du corps dans le col 3 d'une bouteille de plongée 4, contenant de l'air ou autres mélanges gazeux respiratoires, et, dans l'exemple représenté, deux bras 5 et 6 s'étendant en V depuis l'embase et aux extrémités libres desquels sont formées les sorties de gaz haute pression 7₁ et 7₂ débouchant typiquement latéralement dans une même direction orthogonale à l'axe A (vers l'avant sur la figure 1) pour le montage, direct par filetage DIN ou par étrier à vis, de blocs détendeurs de premier étage 8₁ et 8₂ (figure 2) d'où partent une série de tubulures reliées au moins à un détendeur deuxième étage et à un manomètre ou un boîtier contrôleur de plongée. La longueur des bras peut être réduite ou allongée unilatéralement.

Comme représenté sur la figure 1, la canalisation interne entre chaque sortie 7₁ et 7₂ et l'entrée dans l'embase 2 est sélectivement obturable manuellement par un robinet 9₁, 9₂ tel que celui décrit dans le document EP-A-0 750 147, au nom de la demanderesse.

Comme on le voit bien sur la figure 1, selon un aspect de l'invention, les axes S₁ et S₂ (perpendiculaires au plan de la figure 1) des sorties 7₁ et 7₂ sont décalés verticalement (dans la direction de l'axe de symétrie longitudinal A de l'embase 2) d'une distance d, supérieure à 5 mm, typiquement supérieure à 10 mm, et sont écartés transversalement (horizontalement) d'une distance e. Pour un diamètre nominal φ d'embase 2, le décalage vertical d est inférieur à 80 mm et avantageusement compris entre 20 et 60 mm. Corrélativement, l'écartement transversal e est supérieur à 60 mm et typiquement inférieur à 130 mm, avantageusement compris entre 70 et 100 mm.

Avantageusement, en particulier pour les corps de robinet monobloc, comme dans l'exemple représenté, l'écartement e est sensiblement centré sur l'axe A.

Comme on le voit bien sur la figure 2 avec un tel agencement les interférences entre les tuyauteries partant des blocs détendeurs 8₁ et 8₂ sont grandement réduites, ce qui facilite leur montage/démontage et limite les risques d'usure entre elles.

Quoique l'invention ait été décrite en relation avec des modes de réalisation particuliers, elle ne s'en trouve pas limitée mais est susceptible de modifications et de variantes qui apparaîtront à l'homme de métier dans le cadre des revendications ci-après. En particulier, selon les domaines d'utilisation, les sorties peuvent être décalées dans le plan vertical, comme représenté, et, d'une faible distance, inférieure à 50 mm, dans le plan sagittal. Le cas échéant, les sorties peuvent être décalées sensiblement uniquement dans le plan sagittal.

## Revendications

1. Corps de robinet (1) de bouteille de plongée (4), comprenant une embase de montage (2) du corps sur une bouteille (4), ladite embase de montage (2) ayant un axe (A) et ledit corps de robinet (1) définissant des canalisations internes entre l'embase (2) et deux sorties de raccordement haute pression (7₁, 7₂) à des circuiteries d'utilisation, les axes (S₁, S₂) des sorties de raccordement haute pression (7₁, 7₂) étant décalés l'un de l'autre d'une première valeur (e) selon une direction orthogonale à l'axe (A) de l'embase (2), **caractérisé en ce que** les axes (S₁, S₂) des sorties de raccordement haute pression (7₁, 7₂) sont également décalées l'un de l'autre d'une deuxième valeur (d) dans la direction de l'axe (A) de l'embase (2).

2. Corps (1) selon la revendication 1, **caractérisé en ce que** la deuxième valeur de décalage (d) est comprise entre 5 mm et 80 mm.

3. Corps (1) selon la revendication 2, **caractérisé en ce que** la deuxième valeur de décalage (d) est comprise entre 20 et 60 mm.

4. Corps (1) selon l'une quelconque des revendications 1-3, **caractérisé en ce que** la première valeur de décalage (e) entre les axes (S₁, S₂) des sorties de raccordement haute pression (7₁, 7₂) est supérieure à 60 mm.

5. Corps (1) selon la revendication 1, **caractérisé en ce que** la première valeur de décalage (e) est inférieure à 130 mm.

6. Corps (1) selon l'une quelconque des revendications 1-4, **caractérisé en ce que** la première valeur de décalage (e) est comprise entre 70 et 100 mm.

7. Corps (1) selon l'une quelconque des revendications 1-6, **caractérisé en ce que**, dans ladite direction orthogonale à l'axe (A) de l'embase (2), le premier décalage (e) est sensiblement centré sur cet axe (A).

8. Corps (1) selon l'une des revendications précédentes, **caractérisé en ce que** les sorties de raccordement haute pression (7₁,7₂) sont formées à l'extrémité de deux bras (5,6) s'étendant en V et étant raccordés à l'embase (2).

9. Bouteille de plongée (4) équipée d'au moins un robinet comportant un corps de robinet (1) selon l'une des revendications précédentes.

## Claims

1. Valve body (1) for a diving cylinder (4) comprising a mounting base (2) for mounting the body on a cylinder (4), the said mounting base (2) having an axis (A) and the said valve body (1) defining internal ducts between the mounting base (2) and two high-pressure connection outlets (7₁, 7₂) for connecting to user circuits, the axes (S₁, S₂) of the high-pressure connection outlets (7₁, 7₂) being offset from one another by a first amount (e) in a direction orthogonal to the axis (A) of the mounting base (2), **characterized in that** the axes (S₁, S₂) of the high-pressure connection outlets (7₁, 7₂) are also offset from one another by a second amount (d) in the direction of the axis (A) of the mounting base (2).

2. Body (1) according to Claim 1, **characterized in that** the second amount of offset (d) ranges between 5 mm and 80 mm.

3. Body (1) according to Claim 2, **characterized in that** the second amount of offset (d) ranges between 20 mm and 60 mm.

4. Body (1) according to any one of Claims 1 to 3, **characterized in that** the first amount of offset (e) between the axes (S₁, S₂) of the high-pressure connection outlets (7₁, 7₂) is greater than 60 mm.

5. Body (1) according to Claim 1, **characterized in that** the first amount of offset (e) is less than 130 mm.

6. Body (1) according to any one of Claims 1 to 4, **characterized in that** the first amount of offset (e) ranges between 70 mm and 100 mm.

7. Body (1) according to any one of Claims 1 to 6, **characterized in that**, in the said direction orthogonal to the axis (A) of the mounting base (2), the first offset (e) is more or less centred on this axis (A).

8. Body (1) according to one of the preceding claims, **characterized in that** the high-pressure connection outlets (7₁, 7₂) are formed at the end of two arms (5, 6) extending in the form of a V and connected to the mounting base (2).

9. Diving cylinder (4) equipped with at least one valve comprising a valve body (1) according to one of the preceding claims.

## Patentansprüche

1. Hahnküken (1) für eine Taucherflasche (4), das eine Basis (2) zur Montage des Kükens an einer Flasche (4) umfasst, wobei die Montagebasis (2) eine Achse (A) aufweist und das Hahnküken (1) die inneren Kanäle zwischen der Basis (2) und zwei Hochdruckausgängen (7₁, 7₂) zur Verbindung mit Verbraucherkreisen definiert, wobei die Achsen (S₁, S₂) der Hochdruckverbindungsausgänge (7₁, 7₂) um einen ersten Wert (e) entlang einer orthogonal zur Achse (A) der Basis (2) verlaufenden Richtung voneinander versetzt sind, **dadurch gekennzeichnet, dass** die Achsen (S₁, S₂) der Hochdruckverbindungsausgänge (7₁, 7₂) um einen zweiten Wert (d) in Richtung der Achse (A) der Basis (2) ebenfalls voneinander versetzt sind.

2. Küken (1) nach Anspruch 1, **dadurch gekennzeichnet, dass** der zweite Versatzwert (d) zwischen 5 mm und 80 mm liegt.

3. Küken (1) nach Anspruch 2, **dadurch gekennzeichnet, dass** der zweite Versatzwert (d) zwischen 20 und 60 mm liegt.

4. Küken (1) nach einem der Ansprüche 1 - 3, **dadurch gekennzeichnet, dass** der erste Versatzwert (e) zwischen den Achsen (S₁, S₂) der Hochdruckverbindungsausgänge (7₁, 7₂) größer als 60 mm ist.

5. Küken (1) nach Anspruch 1, **dadurch gekennzeichnet, dass** der erste Versatzwert (e) kleiner als 130 mm ist.

6. Küken (1) nach einem der Ansprüche 1 - 4, **dadurch gekennzeichnet, dass** der erste Versatzwert (e) zwischen 70 und 100 mm liegt.

7. Küken (1) nach einem der Ansprüche 1 - 6, **dadurch gekennzeichnet, dass** in der orthogonal zur Achse (A) der Basis (2) verlaufenden Richtung der erste Versatzwert (e) auf dieser Achse (A) im Wesentlichen zentriert ist.

8. Küken (1) nach einem der vorhergehenden Ansprüche, **dadurch gekennzeichnet, dass** die Hochdruckverbindungsausgänge (7₁, 7₂) am Ende von zwei V-förmigen und an der Basis (2) verbundenen Armen (5, 6) gebildet sind.

9. Taucherflasche (4), die mit mindestens einem Hahn ausgestattet ist, der ein Hahnküken (1) nach einem der vorhergehenden Ansprüche aufweist.
